# EUROPEAN PATENT APPLICATION

(11) **EP 1 926 021 A1**
(43) Date of publication of application: **28.05.2008**
(21) Application number: 06124794.6
(22) Date of filing: 27.11.2006
(51) Int. Cl.: G06F 11/36

(54) **Software test case generation**

(71) Applicant: Sysopen Digia Oyj, 00380 Helsinki (FI)
(72) Inventor: Hoikka, Kimmo, 53850, Lappeenranta (FI)
(74) Representative: Pykälä, Timo Tapani

(57) **Abstract**

Software test case generation involving an apparatus, a computer program and a method are disclosed. The apparatus comprises: a parser module (104) configured to parse a source code into a code model (110); an analysis module (112) configured to parse the source code by utilizing the code model (110) so that symbol values and dependencies are resolved and possible execution paths are determined; a user interface module (102) configured to visualise the possible execution paths in the source code and to receive a selection of an execution path from a user; and a generation module (106) configured to generate a test case testing the selected execution path.

## Description

### Field

The invention relates to an apparatus, a computer program and a method for software test case generation.

### Background

Software is usually tested before it is shipped to a customer. An acronym SUT refers to the software (or system) under test, i.e. the software under development. In principle, two testing environments exist: a white-box testing environment and a black-box testing environment. The white-box testing environment refers to a testing environment where the entire source code is available. In white-box testing, the information of the source code is utilized to create a better test coverage. The black-box testing environment refers to a testing environment where the implementation source code is not available, only the API (Application Programming Interface) and libraries are available. In black-box testing, test cases are derived from the information available in the API.

An increasingly important part of software development includes creating unit and module tests against the SUT. Unit and module tests verify that the APIs and classes of the software function as specified with high quality. By testing the SUT under defined conditions with precise parameters, the unit and module tests ensure its stability, robustness and responsiveness. The aim of a single test is to test a specified execution path of the SUT and verify that it is completed without problems. An execution path means the execution flow that the program follows with a given set of parameters. To ensure that there is no unexpected behaviour, it is important that most (or all) of the execution paths are tested before the software is shipped for market.

The difference between a unit test and a module test is that the unit test tests a single class, method or function in a white-box testing environment, whereas the module test tests a software component through its publicly available API in a black-box environment. Best overall quality is achieved by developing both unit and module tests for the SUT.

Tests are developed in the same way as software in an IDE (Integrated Development Environment) utilizing a test framework that enables uniform execution and reporting features; examples of such frameworks include JUnit for Java, EUnit for Symbian OS C++ and others. A common factor in all testing frameworks is that they arrange tests into test suites/sets, enable asserting the state of program variables and return values of method calls, and judge the test as passed or failed according to the assertions.

The quality of unit and module tests is measured according to their coverage against the SUT. Typical measures are line coverage, i.e. the lines that were executed by the tests, branch coverage, i.e. which branch statements got taken and which did not, and path coverage, i.e. all the possible execution paths of the code under test.

### Brief description

The present invention seeks to provide an improved apparatus, computer program and method.

According to an aspect of the present invention, there is provided an apparatus as specified in claim 1.

According to another aspect of the present invention, there is provided a computer program as specified in claim 11.

According to another aspect of the present invention, there is provided a method as specified in claim 12.

According to another aspect of the present invention, there is provided an apparatus as specified in claim 22.

### List of drawings

Embodiments of the present invention are described below, by way of example only, with reference to the accompanying drawings, in which
Figure 1 illustrates embodiments of an apparatus;
Figures 2, 3 and 4 illustrate operation of the apparatus;
Figures 5 and 6 illustrate embodiments of a path selection user interface; and
Figure 7 illustrates embodiments of a method.

### Description of embodiments

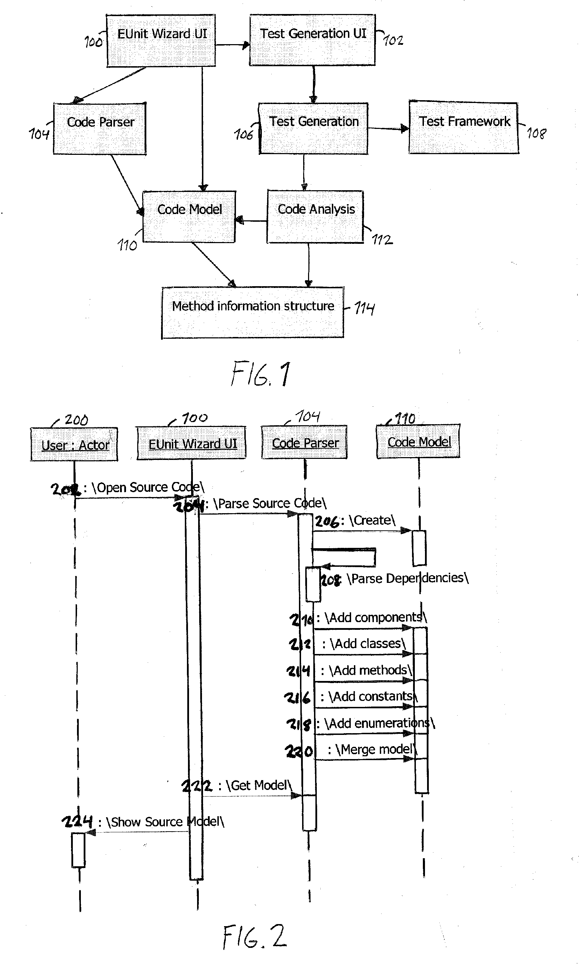

With reference to Figure 1, let us examine embodiments of an apparatus. The apparatus may increase efficiency, quality, and/or productivity of unit and module testing performed by software developers by automating the test case creation based on information of the code under test.

The apparatus may be implemented as a part of a testing tool EUnit Pro by SysOpen Digia. The apparatus may be called EUnit Test Wizard by SysOpen Digia.

The user may create tests for each path of the code under test or select and analyse the path to be tested with the apparatus. The apparatus may analyse the code under test, visualize the code lines that are executed depending on whether the selected branches are taken or not taken, enable the selection of paths for which to create the test cases (or the creation of a test for each path), and show in the created test cases the branch expressions and their expected values. The apparatus may also create in the test cases the correct input values for the class constructors, class members and method/function parameters as well as assertions that the return value is correct. If the activation of a branch requires a stub version of a method to be created, the apparatus may also do that on the behalf of the user. All that is left for the user is to validate the created test code and to add assertions that the function performs the task specified in the requirements.

The apparatus comprises a parser module 104 configured to parse a source code into a code model 110, i.e. to analyse the source code in order to determine its grammatical structure with respect to a (programming-language-specific) given formal grammar. The parser module 104 may parse various elements present in the source code, such as components, classes, enumerations, variables, methods/functions and method/function bodies in order to produce the object model. If the apparatus is integrated with an IDE, a compiler included in the IDE may provide a part of parser module 104 functionality. The code model 110 includes information on the SUT. The code model 110 may be an object model including the components, classes, methods/functions, enumerations, variables, constants and other information parsed by the parser module 104

The apparatus also comprises an analysis module 112 configured to parse the source code by utilizing the code model 110 so that symbol values and dependencies are resolved and possible execution paths are determined. The analysis module 112 may perform an analysis of a method body extracting branches and paths. The analysis module 112 may obtain the method/function body from the code model 110 and parse it to produce a method information structure 114. The method information structure 114 may be parsed when needed, because the size of it may cause performance problems. The analysis module 112 may also parse through the branches and their expressions to analyze the possible paths and variables, attributes and method calls needed for activating the path from a test case. The method information structure 114 may include a representation of the branches and paths of the method/function as well as the parameter and variable values and method calls made from the method.

The apparatus further comprises a user interface module 102 configured to visualise the possible execution paths in the source code and to receive a selection of an execution path from a user, and a generation module 106 configured to generate a test case testing the selected execution path. The user interface module 102 may visualize branches and paths of the code under test. The generation module 106 may create test cases with information on the path to be tested and initial parameters for class constructors and method calls.

The apparatus may also comprise another user interface module 100, with which the user opens the source code under test and which shows the code model. The user may select the methods to be tested from the user interface module 100, after the selection the test generation user interface is shown with the user interface module 102. The other user interface module 100 may also be integrated into an IDE, such as Eclipse.

The apparatus may also comprise a test framework module 108, which is platform-specific, i.e. for Symbian C++ it may be EUnit or TEFUnit, for standard C/C++ it may be CppUnit, and for Java it may be JUnit. Only the actual test case format is dependent on the test framework, whereas the branch and path analysis and the test generation are independent from the platform and the framework used.

One test case may test one execution path in the SUT. Each branch statement (if, for, switch, and while clauses in C++ and Java) in any method of the SUT may double the amount of possible execution paths and thus doubles the amount of test cases needed to thoroughly test the SUT. The amount of possible execution paths in a method is often referred to as the complexity of the method.

A branch refers to a code statement that causes the execution to continue either directly after the branch if the branch is taken or at a specified point later if the branch is not taken. The expression "the branch is taken" refers to a situation where a condition specified in the branch is evaluated true and therefore the next block after the branch is executed. The expression "the branch is not taken" refers to a situation where a condition specified in the branch is evaluated false and therefore the next block after the branch is not executed but execution continues elsewhere.

A method with four possible execution paths is referred to as a method with a complexity of four. Typical methods of well-designed software have a complexity below ten, but it is not rare to encounter methods with a complexity beyond one hundred. The first example below has three independent branch statements and thus eight possible execution paths:

```
     void Foo( int a, int b, int c )
         {
         if( a )
             {
            // details omitted
             }
         if( b )
             {
            // details omitted
             }
         if ( c )
             {
            // details omitted
             }
         }
```

**Table 1: The first example**

| **if( a ) value** | **if( b ) value** | **if( c ) value** | **"a" value** | **"b" value** | **"c" value** |
|---|---|---|---|---|---|
| True | True | True | 1 | 1 | 1 |
| True | True | False | 1 | 1 | 0 |
| True | False | True | 1 | 0 | 1 |
| True | False | False | 1 | 0 | 0 |
| False | True | True | 0 | 1 | 1 |
| False | True | False | 0 | 1 | 0 |
| False | False | True | 0 | 0 | 1 |
| False | False | False | 0 | 0 | 0 |

The term 'independent' here means that any of the branch statements can be evaluated as true or false independently. The complexity of the method for the independent branch statements is the amount of branches in the power of two as a new branch can be evaluated as true or false in combination with all the previous branches. Adding a new independent if statement to the above example would increase its complexity to 16. Table 1 shows the branch values and an example of an input of the first example.

Methods with a complexity greater than four are error-prone and require careful testing, whereas methods with a complexity of two or less can often we validated by human inspection rather than by unit tests developed for them. Module tests test methods working together so test cases test execution paths from multiple methods simultaneously. The biggest problem with complexity is that it becomes hidden as the length of the method increases and dependencies between the branch statements emerge. The second example below shows a method with dependent branch statements.

```
     void Foo( int a, int b )
         {
         if ( a > 0 )
             {
            // details omitted
             }
         if( a > b )
             {
            // details omitted
             }
         else if( b > 0 )
             {
            // details omitted
             }
         }
```

In this case the complexity of the method is not straightforward due to the else statement and dependencies between the expressions in the branches. If the branches were independent, the complexity would be eight but the else clause means that the last two branches cannot both be true at the same time. The dependency between expressions also rules out a case where the first branch is true and the second and third branches are false, as it is impossible for "a" to be greater than zero and smaller than "b" when "b" has to be greater than zero. The amount of possible execution paths in the example is five.

Table 2 shows the branch values and an example of an input of the second example.

**Table 2: The second example**

| **if( a > 0 ) value** | **if( a > b ) value** | **if( b > 0) value** | **"a" value** | **"b" value** | **Description** |
|---|---|---|---|---|---|
| True | True | True | N/A | N/A | Impossible |
| True | True | False | 1 | 0 | |
| True | False | True | 1 | 2 | |
| True | False | False | N/A | N/A | Impossible |
| False | True | True | N/A | N/A | Impossible |
| False | True | False | 0 | -1 | |
| False | False | True | 0 | 2 | |
| False | False | False | 0 | 0 | |

Even though the simplest solution would be to avoid complexity in methods, it is not an option as there is a need for programs to alter their behaviour based on circumstances and branches are the way to do it with modern programming languages.

When the code under test is studied, it is not immediately apparent how many paths there are and how many of them need to be tested by the test cases in order to achieve a proper test coverage. A statistic analysis performed on a typical Symbian C++ application code (over 3.5 megabytes of source code) revealed that:
- in 50% of real life methods complexity is 1 (simple methods, getter methods, setter methods, constructors, destructors, etc.);
- in 20% of real life methods complexity is 2-4 (basic methods, basic algorithms, data processing, simple state machines, etc.); and
- in 30% of real life methods complexity is >3 (complex methods, data processing, imaging algorithms, etc.)

Testing trivial things does not add any value to the software, so the testing focus is on basic and complex methods. It also is important to avoid over-testing, i.e. a single execution path should only be tested once. It is best to have a good overall coverage of the whole software rather than a thorough testing of single methods. The minimum recommended path test coverage in real projects is about 75%; in mission critical software the requirements are even higher (path coverage >90%). The combinatory logic of how the amount of execution paths is derived from the branches of the code (also called as a branch model) is difficult for many developers, and evaluating the amount of branches manually is error-prone, which leads to the fact that without proper tools it is hard or impossible to reach the required path coverage in time. In many cases important execution paths are simply not tested because the developer did not understand them to be possible, or overlooked some combinations.

A problem with the branches in a code is that when a branch is taken or not taken in execution time, it most probably has an effect on the execution of the rest of the code. Branch evaluation may have side effects, for example if the branch condition is a result of a function call. Sometimes the code may contain parts that can never be executed due to dependencies of the branch statements, and sometimes the code contains parts that should not be executed as parts of a specific path. Sometimes an initialisation, for example, is only performed properly on a certain path although the expectation is that it is done properly on all paths. Having the paths and their dependencies read by humans is error-prone because the code is represented in a form that always contains all the paths. Exceptions form a further problem as they cause the execution of the code to completely change from the path visible in the code. The example below illustrates these problems:

```
     void Foo ( int a )
         {
         int resource_id;
         int error;
         if( a > 0 )
             {
            error = ReadResource( a );
            // allocates memory
             }
         if( error == KErrNone )
             {
            resource_id = ParseIdentifier();
             }
         AllocateStorageForResourceL( resource_id );
         // may cause an exception
         }
```

In the above example the value of resource_id is only initialised on the path where if ( error == KErrNone ), so the value returned by ReadResource is something else, and the variable shall have some value depending on what was in the memory area earlier (typical memory allocation /release schemes do not clean the stack memory used for variable initialisation). Also if the parameter "a" has a negative value, the last method call may do something undefined. Even though unfortunate, this kind of programming errors are common as the code is often tested only in a "happy day" environment and the developer often ignores the "what if" paths of execution as they may not be that clearly visible in the code. A tool is needed for indicating all the possible paths and for generating tests for at least the most essential ones.

A software code is presented as an ASCII text, in a form that contains all the possible execution paths in one representation; all the branch statements and exceptions and error handling is tangled in the method descriptions. This makes it even harder for the developer to see the consequences of evaluating a branch as true or false. Even though modern development IDE shows colour coding and the developers are able to add comments to the code to make it clearer, it is not possible to see which code is executed and which is not executed as a part of a particular execution path. If the code under test contains for example sixteen possible paths, sixteen different code views are required to visualize the code that is executed on each path. Moreover, this is not a task that can be performed manually, so a tool is needed for showing the exact code that gets executed on a given path.

Each relevant execution path may need to be tested and in order to do that files for the test cases need to be generated and necessary stubs for path activation need to be created. This task is linked with the analysis of the code under test; each test case is expected to clearly indicate for the developer which branches need to be activated and what kind of parameters are needed in order to execute exactly the given path. When new branches are added to the SUT, the new paths are tested by generating test cases for them.

The operation of the apparatus may be divided into three sub-steps that may follow each other: parsing a source code, analysing a code model and generating test cases.

Figure 2 illustrates how the apparatus may parse the source code, i.e. the operation of the parser module 104. The user 200 opens 202 with the user interface module 100 the source code that will be parsed. Next, via the user interface module 100, start parse command 204 is issued to the parser module 104. The parser module 104 parses the given input file(s), including all the files they include/depend upon, to find all the dependant source elements. This is needed in order to know the values of the constants and enumerations that are defined in other source files than the one that is being tested. The parser module 104 thus creates 206 a code model 100 and parses 208 the dependencies. In an object-oriented programming environment, specific elements such as components 210, classes 212, methods 214, constants 216, and enumerations 218 are added to the code model 110.

After the parsing and the model element creation the code model 110 may be merged 220 since there may be multiple declarations and definitions for the same elements. For a single code element such as a method in the code model 110, each location where it has been defined, declared and used is defined. After the parsing, the user interface module 100 obtains 222 the code model 110 and shows 224 it to the user 200. The user interface module 100 may also be configured to visualise the code model 110.

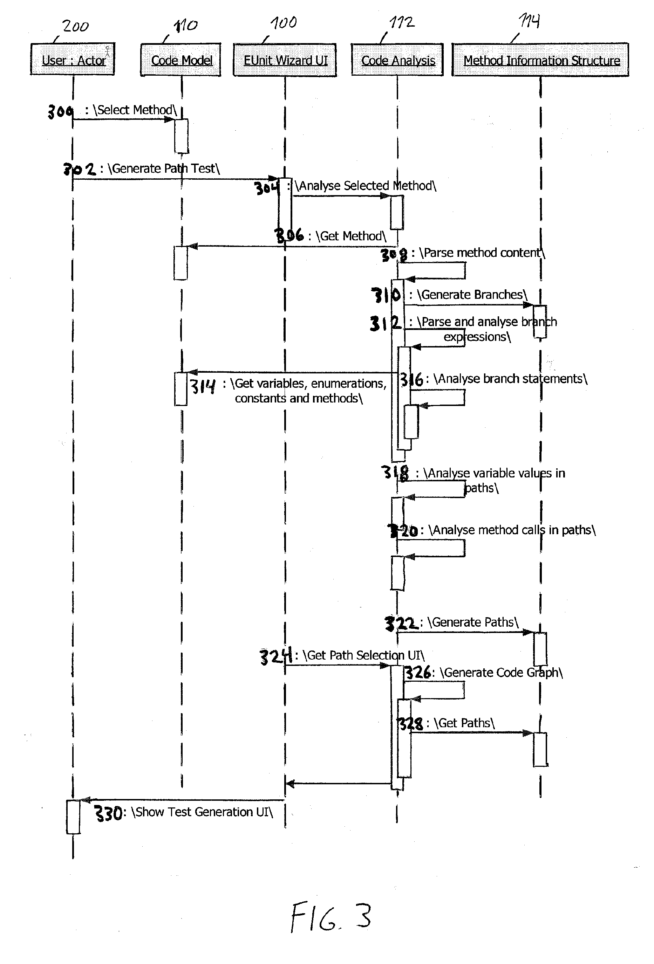

Figure 3 illustrates how the code model may be analysed. The user 200 may select 300 a method and start 302 the generation of the test by starting 304 an analysis of the selected method. The user interface module 102 may also be configured to receive from a user a selection determining a portion of the source code, and the analysis module 112 may also be configured to parse the selected portion of the source code. The portion of the source code may refer to a method, a function, or to another known representation of a portion of the source code.

The analysis module 112 receives 306 the method from the code model 110 and parses 308 the contents of the method. The method body is parsed to form a method information structure 114: all the symbols inside the body are resolved and mapped to the code model. The branches are generated 310.

An example: the method body contains a branch if( aFoo == KErrNone ), the code model is searched for the value of KErrNone, and the correct value is found.

The next phase is parsing 312 the branches and their expressions to resolve how the branches are activated. This also includes obtaining 314 variables, enumerations, constants and methods from the code model 110.

Possible branches in the method body are if, else, else if, for, switch, while, do-while and exceptions (try, catch), for example. The branch statements are analysed 316, and variable values of the paths are analysed 318. Also method calls made from the body are analysed 320 to find out if they have an effect on the execution and if those method calls can be stubbed in the test case creation. Method call analysis may be critical in unit testing since the activation of some paths may require generating a stub that returns the desired value for the path.

From the branch information and the symbol information parsed and received from the code model the possible execution paths are extracted and a path model is generated 322. During path analysis the variable values are tracked along the path and operations on the variables, for example, are tracked. In fact, the analysis module 112 performs a simulated runtime analysis on the source code. For example, a method may take an integer parameter but assign another value to that variable on the path, thus enabling/disabling some branches later on the path. Method calls from the body may also change the values of variables. An example of a code is shown below:

```
     void Foo( int aValue )
     {
     aValue = iValue;
     if( aValue )
         {
         }
     }
```

In this case the path is activated by the variable iValue instead of aValue; the analysis module 112 also resolves this kind of variable dependencies. A range analysis is performed on each variable used on the path, which means that the value of the variable is tracked throughout the path to find out what is the real value required for each variable to automatically activate the requested path. This analysis simulates the runtime behaviour of the method. Once the method has been fully parsed and paths have been created, the path selection is shown to the user. This is achieved by obtaining 324 the path selection user interface, and generating 326 a code graph by obtaining 328 the paths from the method information structure 114.

The analysis module 112 may thus perform several activities: parse branches and expressions of the source code to resolve how the branches are activated, analyse method calls made from the source code, generate a stub returning a desired value for the method call, and track the symbol values.

After analysing the code model, the user interface module 100 shows 330 the test generation user interface to the user 200.

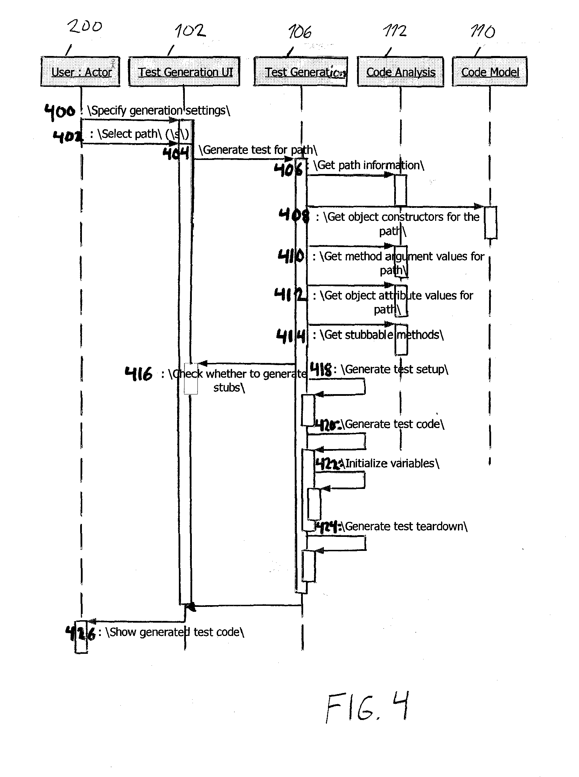

Figure 4 illustrates how the test cases may be generated. The user defines 400 the settings for the test case creation, for example whether to create stubs for the method calls made from the method under test body. Next, the user selects 402 the path(s) to be tested, and the user interface module 102 instructs 404 the generation module 106 to start the test generation for the selected path(s). The generation module 106 maps the path information and the variables to the specific test framework creating tests according to the test framework rules and using the assertions and variable initialisation supported by the test framework. The generation module 106 thus obtains the path information 406, object constructors for the path 408, method argument values for the path 410, object attribute values for the path 412, and methods 414 that can be stubbed from the analysis module 112 and the code model 110.

It may be confirmed 416 from the user 200 via the user interface module 102 whether to generate stubs. If the method under test is a member of a class, then the generation module 106 may also check in which state the class object instance needs to be for the path, find the correct class constructor, and create the initialisation code to instantiate the class object in the required state. The generation module 106 is not dependent on the object-oriented approach, i.e. the same path generation can also be applied to source code and testing frameworks utilizing other known approaches.

After the foregoing operations, the generation module 106 is ready to generate the actual test: the test setup is generated 418, the actual test code is generated 420, variables are initialised 422, and the test teardown (= operations performed while ending the testing) is generated 424. Finally, the generated test code may be shown 426 to the user 200.

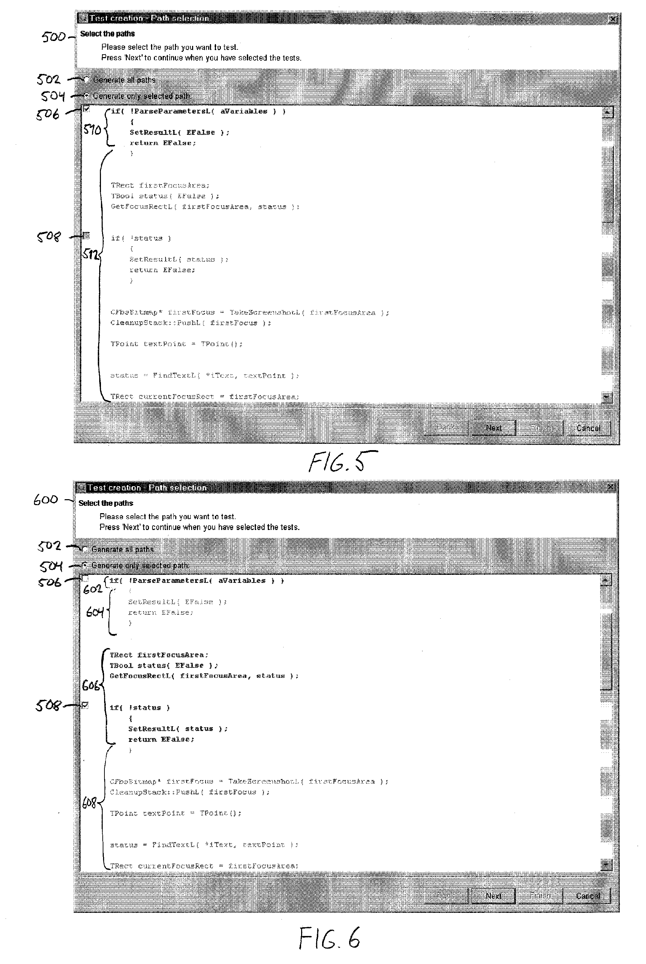

Figures 5 and 6 illustrate how the path selection user interface may be implemented. A path selection window 500 is shown to the user. The user is given a choice: test cases may be generated for all paths with the first choice 502, or for a selected path with the second choice 504.

In Figure 5 the user has selected the second choice 504. Check boxes 506 and 508 illustrate two different paths that may be selected.

In Figure 5 the user has selected the check box 506, so the user can see that when the branch (if( !ParseParametersL( aVariables )) is taken (the value is true) the rest of the method is not executed. The part 510 of the method that is executed is shown in bold font, whereas the part 512 of the method that is not executed is shown with a dim font. In Figure 5 the generated test case gives the method such parameters that the branch value is evaluated as true in runtime as the test is being executed. The analysis module 112 may also be configured to determine a source code that does not belong to any possible execution path, and the user interface module 102 may also be configured to visualise the determined source code that does not belong to any possible execution path.

In Figure 6 the first branch 506 is not selected but the second branch 508 is selected in the path selection window 600. Now the test developer can clearly see the code lines 602 and 606 that will be executed in the selected path. In Figure 6 lines 604 and 608 are not executed.

If the method ParseParametersL is an external function and can be stubbed, the generation module 106 can also create a stub version of the method so that the branch can be automatically evaluated as true or false when doing unit tests (testing that this selected method works properly under all conditions). When the user selects to create the test cases for either of the selected path or for all the paths, the test generation user interface commands the generation module 106 to generate the test code, as was discussed with reference to Figure 4.

In summary, the apparatus may perform at least one or more of the following functions: analyse the method body and find all the possible execution paths; resolve the dependencies and links between program variables and object states in different paths; find the values for all the used symbols in expressions by utilizing the code model and performing simulated runtime analysis on the method; generate the test code that contains the variable and object instantiation to activate the selected path(s); generate stub versions of external methods required by the method under test to enable testing full path coverage; and enable the user to see the code executed as a part of a particular execution path and thus find logical errors in the code.

The apparatus may be an appropriately programmed computer. The computer may be an electronic digital computer, which may comprise a working memory (RAM), a central processing unit (CPU), and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written using the program instructions.

The computer may further comprise a number of other devices, such as user interface equipment, memory equipment, communication equipment, etc.

Interfaces between the various modules may be implemented with suitable interface technologies, such as a message interface, a method interface, a sub-routine call interface, a block interface, or any means enabling communication between functional sub-units.

An embodiment provides a computer program comprising program instructions which, when loaded into the computer, constitute at least some of the modules 100, 102, 104, 106, 108, 110, 112 and 114.

The computer program may be in a source code form, object code form, or in some intermediate form, and it may be stored in some sort of a carrier, which may be any entity or device capable of carrying the program. Such carriers include a record medium, a computer memory, a read-only memory, an electrical carrier signal, a telecommunications signal, and a software distribution package, for example. Depending on the processing power needed, the computer program may be executed in a single computer or it may be distributed amongst a number of computers.

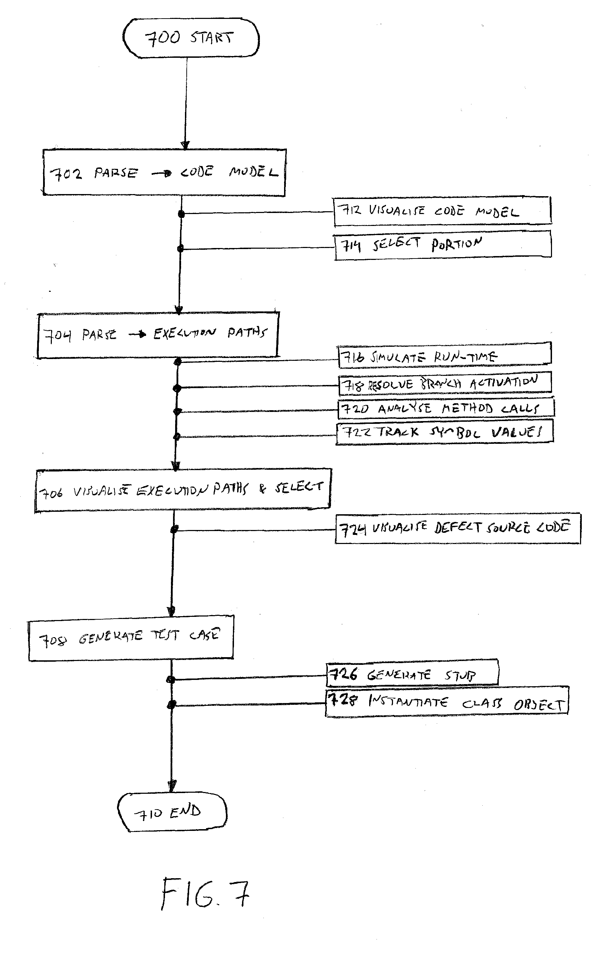

Embodiments of a method will be described next with reference to Figure 7. The method starts in 700.

In 702, a source code is parsed into a code model.

In 712, the code model may be visualised.

In 714, a selection determining a portion of the source code may be received from a user, and further parsing may be performed on the selected portion of the source code.

In 704, the parsing of the source code continues by utilizing the code model so that symbol values and dependencies are resolved and possible execution paths are determined. The continued parsing may include at least one of the following: performing 716 a simulated runtime analysis on the source code; parsing 718 branches and expressions of the source code to resolve how the branches are activated; analysing 720 method calls made from the source code; and tracking 722 the symbol values.

In 706, the possible execution paths in the source code are visualised and a selection of an execution path is received from a user. In 724, a defect source code may be visualised by determining a source code that does not belong to any possible execution path and by visualising the determined source code that does not belong to any possible execution path.

In 708, a test case testing the selected execution path is generated. The generation may include at least one of the following: generating 726 a stub returning a desired value for the method call; and instantiating 728 a class object defined in the source code in a required state.

In 710, the method ends when the test case generation is ready. Before this, at least some of the operations 702, 704, 706, 708, 710, 712, 714, 716, 718, 720, 722, 724, 726 and 728 may be repeated as many times as necessary. It should be noted that no special order of operations is required in the method, except where necessary. For example: the analysis of method calls in 720 and the tracking of symbol values in 722 are not necessarily performed in the shown order as they may be performed in a reverse order, or even in parallel. The previously described details of the apparatus may be applied to the method as well.

Even though the invention has been described above with reference to an example according to the accompanying drawings, it is clear that the invention is not restricted thereto but it can be modified in several ways within the scope of the appended claims.

## Claims

1. An apparatus comprising:
a parser module configured to parse a source code into a code model;
an analysis module configured to parse the source code by utilizing the code model so that symbol values and dependencies are resolved and possible execution paths are determined;
a user interface module configured to visualise the possible execution paths in the source code and to receive a selection of an execution path from a user; and
a generation module configured to generate a test case testing the selected execution path.

2. The apparatus of claim 1, wherein the analysis module is further configured to perform a simulated runtime analysis on the source code.

3. The apparatus of any preceding claim, wherein the user interface module is further configured to visualise the code model.

4. The apparatus of any preceding claim, wherein the user interface module is further configured to receive from a user a selection determining a portion of the source code, and the analysis module is further configured to parse the selected portion of the source code.

5. The apparatus of any preceding claim, wherein the analysis module is further configured to parse branches and expressions of the source code to resolve how the branches are activated.

6. The apparatus of any preceding claim, wherein the analysis module is further configured to analyse method calls made from the source code.

7. The apparatus of claim 6, wherein the analysis module is further configured to generate a stub returning a desired value for the method call.

8. The apparatus of any preceding claim, wherein the analysis module is further configured to track the symbol values.

9. The apparatus of any preceding claim, wherein the generation module is further configured to instantiate a class object defined in the source code in a required state.

10. The apparatus of any preceding claim, wherein the analysis module is further configured to determine a source code that does not belong to any possible execution path, and the user interface module is further configured to visualise the determined source code that does not belong to any possible execution path.

11. A computer program comprising program instructions which, when loaded into a computer, constitute the modules of any preceding claim.

12. A method comprising:
parsing a source code into a code model;
parsing the source code by utilizing the code model so that symbol values and dependencies are resolved and possible execution paths are determined;
visualising the possible execution paths in the source code and to receive a selection of an execution path from a user; and
generating a test case testing the selected execution path.

13. The method of claim 12, further comprising: performing a simulated runtime analysis on the source code.

14. The method of any preceding claim 12 to 13, further comprising:
visualising the code model.

15. The method of any preceding claim 12 to 14, further comprising:
receiving from a user a selection determining a portion of the source code; and
parsing the selected portion of the source code.

16. The method of any preceding claim 12 to 15, further comprising:
parsing branches and expressions of the source code to resolve how the branches are activated.

17. The method of any preceding claim 12 to 16, further comprising:
analysing method calls made from the source code.

18. The method of claim 17, further comprising: generating a stub returning a desired value for the method call.

19. The method of any preceding claim 12 to 18, further comprising:
tracking the symbol values.

20. The method of any preceding claim 12 to 19, further comprising:
instantiating a class object defined in the source code in a required state.

21. The method of any preceding claim 12 to 20, further comprising:
determining a source code that does not belong to any possible execution path; and visualising the determined source code that does not belong to any possible execution path.

22. An apparatus comprising:
means for parsing a source code into a code model;
means for parsing the source code by utilizing the code model so that symbol values and dependencies are resolved and possible execution paths are determined;
means for visualising the possible execution paths in the source code;
means for receiving a selection of an execution path from a user; and
means for generating a test case testing the selected execution path.
